# EUROPEAN PATENT APPLICATION

(11) **EP 4 120 130 A1**
(43) Date of publication of application: **18.01.2023**
(21) Application number: 21788868.4
(22) Date of filing: 12.04.2021
(51) Int. Cl.: G06K 9/20, G06N 3/02

(54) **METHOD AND DEVICE FOR IDENTIFYING VEHICLE THROUGH IMAGE AND WIRELESS SIGNAL ANALYSIS**

(30) Priority: 16.04.2020 KR 20200045718
(71) Applicant: Axonsis Inc., Seoul 08216 (KR); Song, In Eui, Seoul 07929 (KR)
(72) Inventor: SONG, In Eui, Seoul 07929 (KR)
(74) Representative: Williams Powell
(86) International application number: PCT/KR2021/004561
(87) International publication number: WO 2021/210864

(57) **Abstract**

The present invention relates to a method and a device for identifying a vehicle through an image and wireless signal analysis, the device comprising: an infrared camera for capturing the appearance of a vehicle while irradiating the vehicle with infrared rays having different wavelength bands from each other; an antenna; a wireless communication unit for receiving, through the antenna, a wireless signal transmitted from a wireless communication device mounted or loaded on the vehicle; a storage unit for storing an infrared image captured by the infrared camera, and the wireless signal received through the wireless communication unit; and a control unit for extracting a first identification value by analyzing the infrared image stored in the storage unit, extracting a second identification value by analyzing the wireless signal stored in the storage unit, and identifying the vehicle on the basis of the first identification value and the second identification value.

## Description

### [Technical Field]

The present disclosure relates to a vehicle identification method, and more particularly, to a method and device for identifying a vehicle through image and wireless signal analysis.

### [Background Art]

The vehicle license plate has a unique number assigned to distinguish each vehicle and is used to inquire information such as vehicle type, manufacturer, period of manufacture, purpose of use, displacement, motor type, owner, registered place of residence, unregistered vehicle, vehicle against the lOth-day-no-driving system, stolen vehicle. Therefore, it is very important to quickly and accurately recognize the vehicle license plate in any vehicle license plate number inquiry environment.

Vehicle license plate number recognition technology is a technology for recognizing a vehicle from a license plate. It is widely employed for the control system in parking management facilities to monitor vehicles entering/exiting through a non-ticketed entry system and to settle parking fees based on the entry time. It is also widely employed to crack down on road traffic violations such as lane violations, signal violations, and speed violations.

However, the conventional vehicle license plate number recognition technology has a drawback. The vehicle ID recognition rate is greatly reduced when snow, rain, dirt, etc. cause the vehicle front license plate to be unrecognizable, when sunlight is reflected laterally on some parts of the vehicle body, or when diffused reflection occurs due to night-time vehicle lights.

For example, in order to recognize the vehicle ID of a vehicle moving through a parking lot entrance, the vehicle ID recognizer only captures images from a designated location on a side far from the vehicle. Particularly, during the day, it is affected the direction and brightness of sunlight. Also, the installation location of the vehicle ID recognizer is affected by various shadows. Accordingly, there may be a negative influence on the captured images.

Further, when there is reflected light, a reflection (Miller) effect occurs due to the appearance color or license plate color of the entering vehicle. Also, when an image is captured agaist light, the vehicle ID may not be recognized from the captured image due to the influence of shadow or the like.

In addition, when the vehicle ID plate is blocked due to a change in the surrounding environment caused by snow, rain, or the like, when the vehicle front number plate is not recognized due to dirt thrown onto the plate, or when a smear effect occurs due to reflection of sunlight at a lateral angle on a part of the body of an entering vehicle, the vehicle ID recognition rate is greatly reduced. Moreover, at night, it is very limited to recognize the license plate of the vehicle due to diffused reflection of vehicle light or the like.

To address such issues, Korean Patent Application Publication No. 10-2019-0099987 discloses a "vehicle parking management system using vehicle convergence recognition technology."

According to the document, the "vehicle parking management system using vehicle convergence recognition technology" analyzes a Bluetooth signal from the driver's smartphone or a beacon tag installed in the vehicle and, and uses the same as vehicle inforqamtion in combination with the result of license plate recognition (LPR) to provide more accurate vehicle convergence technology.

However, the technology proposed in the above patent document requires that a wireless communication device such as near field communication (NFC), Hi-Pass, a beacon, or a radio transmitter be attached separately to the vehicle for vehicle management.

### [Prior art literature]

(Patent document 1) Korean Patent Application Publication No. 10-2019-0099987

### [Disclosure]

### [Technical Problem]

Therefore, the present disclosure has been made in view of the above problems, and it is one object of the present disclosure to provide a method and device for identifying a vehicle through image and wireless signal analysis that reduces vehicle recognition errors frequently occurring according to various external factors such as snow or rain, foreign matter, license plate change, new standard introduction, and a custom license plate.

It is another object of the present disclosure to provide a method and device for identifying a vehicle through image and wireless signal analysis capable of recognizing the vehicle using a communication device attached when the vehicle is shipped and a communication device carried by a driver.

### [Technical Solution]

In accordance with one aspect of the present disclosure, provided is a device for identifying a vehicle through image and wireless signal analysis, the device including an infrared camera configured to capture an image of an appearance of the vehicle while radiating infrared light onto the vehicle; an antenna; a wireless communication unit configured to receive, through the antenna, a wireless signal transmitted from a wireless communication device installed or mounted in the vehicle; a storage unit configured to store the infrared image captured by the infrared camera and the wireless signal received through the wireless communication unit; and a control unit configured to extract a first identification value by analyzing the infrared image stored in the storage unit, extract a second identification value by analyzing the wireless signal stored in the storage unit, and identify the vehicle based on the first identification value and the second identification value.

The control unit may recognize a vehicle ID as the first identification value from the infrared image using an optical character reader (OCR).

The control unit may recognize a vehicle ID as the first identification value from the infrared image based on artificial intelligence.

The control unit may recognize a license plate as the first identification value from the infrared image based on artificial intelligence.

The control unit may recognize the appearance of the vehicle as the first identification value from the infrared image based on artificial intelligence.

The appearance of the vehicle may include at least one of an exterior color, an interior color, a black box appearance, a headlamp design, a rear lamp design, an emergency lamp flickering interval, a glass production date, a wheel design, a grill design, and a vehicle emblem.

The control unit may recognize a vehicle model as the first identification value using the appearance of the vehicle based on artificial intelligence.

The control unit may extract a waveform of the wireless signal as the second identification value from the wireless signal.

The control unit may analyze data included in the wireless signal and extracts at least one piece of information as the second identification value from the data.

The control unit may extract a MAC address as the second identification value from the wireless signal.

The wireless signal may be a signal generated by a tire pressure monitoring system (TPMS) of the vehicle.

In accordance with another aspect of the present disclosure, provided is a method for identifying a vehicle through image and wireless signal analysis, the method including recognizing, by a vehicle identification device, an appearance of the vehicle; extracting, by the vehicle identification device, a first identification value by analyzing the appearance of the vehicle; receiving, by the vehicle identification device, a wireless signal transmitted from a wireless communication device installed or mounted in the vehicle; extracting, by the vehicle identification device, a second identification value by analyzing the wireless signal; and identifying, by the vehicle identification device, the vehicle based on the first identification value and the second identification value.

In the recognizing of the appearance of the vehicle, the vehicle identification device may recognize the appearance of the vehicle through infrared spectroscopy.

In the extracting of the first identification value, the vehicle identification device may recognize at least one of a vehicle ID, a license plate, the appearance of the vehicle, and a vehicle model as the first identification value based on artificial intelligence.

### [Advantageous Effects]

As described above, according to the present disclosure, by providing a method and device for identifying a vehicle through image and signal analysis that extract a first identification value by analyzing an infrared image captured using an infrared camera, extract a second identification value by analyzing a wireless signal received through a wireless communication unit, identify the vehicle based on the first identification value and the second identification value, vehicle recognition errors frequently occurring according to various external factors such as snow or rain, foreign matter, license plate change, new standard introduction, and a custom license plate may be reduced.

In addition, for vehicle management, a separate wireless communication device such as near field communication (NFC), Hi-Pass, a beacon, or a radio transmitter is not required.

### [Description of Drawings]

FIG 1 is a block diagram showing a schematic configuration of an inside of a device for identifying a vehicle through image and wireless signal analysis according to an embodiment of the present disclosure;
FIG. 2 is a flowchart illustrating a method for identifying a vehicle through image and wireless signal analysis according to an embodiment of the present disclosure;
FIG. 3 is a diagram illustrating a configuration of a vehicle entry/exit management system to which a vehicle identification device according to an embodiment of the present disclosure is applied; and
FIG. 4 is a diagram illustrating a configuration of a parking management system to which a vehicle identification device according to an embodiment of the present disclosure is applied.

### [Best Mode]

It should be noted that the technical terms used herein are used only to describe specific embodiments and are not intended to limit the present disclosure. Also, the technical terms used herein should be interpreted in a sense that is generally understood by a person having ordinary skill in the art to which the present disclosure belongs, unless the context clearly dictates otherwise and should not be construed in a broader sense or in an oversimplified sense. In addition, when technical terms used herein are inappropriate to exactly express the technical idea of the present disclosure, they should be replaced with technical terms that allow the person in the art to properly understand. Also, the general terms used in the present disclosure should be interpreted in accordance with definitions in the dictionary and the predefined or prior context, and should not be construed as being excessively reduced in meaning.

As used herein, the singular form of "a," "an," and "the" includes plural references unless the context clearly dictates otherwise. As used herein, the terms "including," "comprising," etc., should not be construed as necessarily including all the elements or steps disclosed in the present disclosure, but should be construed as meaning that some of the elements or steps may be omitted or additional elements or steps may further included.

As used herein, the suffixes "module" and "unit" are added or used interchangeably to facilitate preparation of this specification and are not intended to suggest distinct meanings or functions.

It will be understood that, although the terms "first," "second," "third," etc. may be used herein to describe various elements, the elements should not be limited by these terms. The terms are used only for the purpose of distinguishing one element from another element. For example, a first element may be termed a second element, and a second element may be termed a first element, without departing from the scope of the present disclosure.

### [List of reference numerals]

| | | | |
|---|---|---|---|
| 110: | Infrared camera | 112: | Infrared LED |
| 114: | Infrared imaging unit | 120a: | Antenna |
| 120: | Wireless communication unit | 121: | NFC module |
| 123: | WLAN module | 125: | RF module |
| 127: | IR module | 129: | Bluetooth module |
| 130: | Control unit | 140: | Storage unit |
| 150: | Network interface unit | | |

### [Mode for Disclosure]

Hereinafter, a preferred embodiment according to the present disclosure will be described in detail with reference to the accompanying drawings, but the same or similar components are designated with the same reference numerals and redundant descriptions thereof will be omitted.

In the following description of the present disclosure, a detailed description of related known technology may be omitted to avoid obscuring the subject matter of the present disclosure. In addition, it should be noted that the accompanying drawings are only for easy understanding of the idea of the present disclosure, and the idea of the present disclosure should not be construed as being limited by the accompanying drawings.

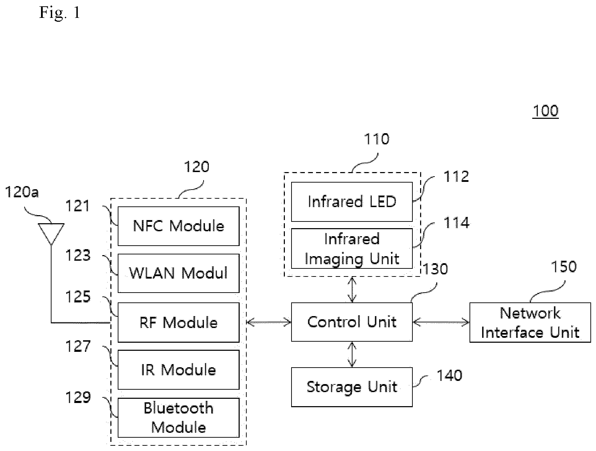

FIG. 1 is a block diagram showing a schematic configuration of an inside of a device for identifying a vehicle through image and wireless signal analysis according to an embodiment of the present disclosure.

Referring to FIG. 1, a vehicle identification device 100 according to the present disclosure may include an infrared camera 110, an antenna 120a, a wireless communication unit 120, a control unit 130, a storage unit 140, and a network interface unit 150.

The infrared camera 110 captures an image of the outer appearance of a vehicle while radiating infrared rays having different wavelength bands onto the vehicle. To this end, the infrared camera 110 may include a plurality of infrared LEDs 112 configured to emit infrared rays and an infrared imaging unit 114 configured to capture infrared rays emitted through the infrared LEDs 112 and reflected on an object. Rays of wavelengths in a visible light band may be radiated according to the imaging environment, but the present disclosure is not limited thereto.

The infrared camera 110 according to the present disclosure may project infrared light of 780 nm, 840 nm, and 940 nm to capture a unique value of a reflection characteristic in each wavelength band according to a material and color of a subject and compare the same with previous data for comparison with a previous color value. Accordingly, the vehicle identification device 100 according to the present disclosure does not require additional hardware or software technology in acquiring accurate color information such as visible light.

The antenna 120a receives a wireless signal transmitted for wireless communication connection from a wireless communication device (e.g., transmission control units (TCUs), car audio equipment, and mobile phones) installed or mounted in the vehicle, or receives various kinds of information transmitted from the vehicle identification device 100 and transmits the same to the outside. Here, the wireless signal may be a signal generated by a tire pressure monitoring system (TPMS) of the vehicle.

The antenna 120a may be an antenna system having a characteristic of directionality only in a specific direction to acquire information about only a vehicle passing through a gate, and may employ a broadband antenna system to acquire various kinds of frequency information.

The TPMS is also known as a tire pressure automatic sensing system, a tire pressure sensing system, or a tire pressure monitoring system. If the tire pressure of a vehicle is excessively high or low, the tire may burst or the vehicle may slide easily, leading to a severe accident. In addition, fuel consumption may increase, worsening fuel efficiency, shortening the tire life, and greatly deteriorating the ride comfort and braking power.

A safety device installed on the vehicle to prevent such defects in tires is the TPMS. TPMS is an RFID sensor attached to a tire and is designed to detect the pressure and temperature of the tire and then send this information to the driver's seat to allow the driver to check the pressure condition of the tire in real time. This system may not only improve the durability of the tire, ride comfort, and braking power, but also increase fuel efficiency and prevent the vehicle body from rocking severely during driving.

The wireless communication unit 120 transmits and receives a wireless signal to and from any one of wireless communication devices installed or mounted in the vehicle through the antenna 120a. To this end, the wireless communication unit 120 may include a near field communication (NFC) module 121 capable of transmitting and receiving a wireless signal to and from a wireless communication device according to an NFC communication standard, a wireless LAN (WLAN) module 123 capable of transmitting and receiving a wireless signal to and from a wireless communication device according to a WLAN communication standard, an RF module 125 capable of transmitting and receiving a wireless signal to and from a wireless communication device according to an RF communication standard, and an IR module 127 capable of transmitting and receiving a wireless signal to and from a wireless communication device according to an IR communication standard, and a Bluetooth module 129 capable of transmitting and receiving a wireless signal to and from a wireless communication device according to a Bluetooth communication standard.

The control unit 130 generally controls the overall operation of the vehicle identification device 100. The control unit 130 may provide or process proper information or functions to a user by processing signals, data, and information input or output through the above-described components or driving an application program stored in the storage unit 140.

Also, the control unit 130 may control at least some of the components described in FIG. 1 to drive the application program stored in the storage unit 140. Furthermore, the control unit 130 may operate at least two of the components included in the vehicle identification device 100 in combination to drive the application program.

The control unit 130 according to the present disclosure stores, in the storage unit 140, an infrared image captured using the infrared camera 110 and a wireless signal received through the wireless communication unit 120. Then, it extracts a first identification value by analyzing the infrared image stored in the storage unit 140, extracts a second identification value by analyzing the wireless signal stored in the storage unit 140, and identifies the vehicle based on the first and second identification values. Here, the first identification value may include a vehicle ID, a license plate, an appearance of the vehicle, and a vehicle type. The appearance of the vehicle may include an exterior color, an interior color, a black box appearance, a headlamp design, a rear lamp design, an emergency lamp flickering interval, a glass production date, a wheel design, a grill design, and a vehicle emblem. The second identification value may include a waveform of the wireless signal, various types of information (e.g., an ID of the wireless communication device) contained in the data of the wireless signal, and a MAC address.

That is, the control unit 130 may recognize the vehicle ID as the first identification value from the infrared image using an optical character reader (OCR).

The control unit 130 may recognize the vehicle ID as the first identification value from the infrared image based on artificial intelligence (AI). That is, the control unit 130 may recognize the vehicle ID from the infrared image using the techniques of a multi-scale convolutional neural network (MCNN) and a recurrent neural network (RNN). For example, the control unit 130 may detect a vehicle, pre-process an image through image quality enhancement, color enhancement, noise reduction, image conversion, and variable threshold parallel processing, extract a license plate through edge detection, partial inference, and feature vector extraction, and extract the ID part from the extracted license plate using a blob technique. Then, it may recognize the vehicle ID through matching recognition, AI (unsupervised, semi-supervised and reinforced learning) recognition, rate processing, and voting processing.

The control unit 130 may recognize a license plate object as the first identification value from the infrared image based on AI. That is, the control unit 130 may recognize the license plate object by applying a grid technique to an object selection method. For example, the control unit 130 may recognize the license plate object by extracting the license plate area of an entering/exiting vehicle, classifying information (e.g., a vehicle ID, a country, an area) in the license plate, and analyzing the shape and content of the license plate. In this case, the difference in color of the license plate may be distinguished because the control unit 130 uses the infrared image. As described above, the control unit 130 may improve floating point operations and optimize speed by applying the grid technique to the object selection method to compensate for disadvantages of an object detection technique commonly used in recognizing a license plate object using AI.

The control unit 130 may recognize the appearance of the vehicle as the first identification value from the infrared image based on AI. That is, the control unit 130 may recognize the appearance of the vehicle by applying the grid technique to the object selection method. For example, the control unit 130 may analyze the appearance of the vehicle by analyzing the design of the front part (excluding the license plate) and the rear part, and features of various attachments and classifying the same into a manufacturer, a vehicle type, a model year, and a displacement.

The control unit 130 may recognize the vehicle type as the first identification value using the appearance of the vehicle based on AI. That is, the control unit 130 may recognize the vehicle type through object recognition using the reinforcement learning function.

Also, the control unit 130 may extract a waveform of the wireless signal as the second identification value from the wireless signal.

The control unit 130 may analyze data included in the wireless signal and extract at least one piece of information as the second identification value from the data.

The control unit 130 may extract a MAC address as the second identification value from the wireless signal. Here, the control unit 130 may receive multiple wireless signals from multiple wireless communication devices and may integrate a part of the MAC address of each of the multiple wireless communication devices to create an identification value. More specifically, since a part of the MAC address of each wireless communication device is integrated to create a separate identification value provided only to the present invention, an issue such as personal privacy infringement that may occur when the MAC address value of a specific wireless communication device is completely received and stored may be prevented. The wireless signal may be a signal generated by the TPMS of the vehicle. To this end, the control unit 130 may use a function of waking up the TPMS. In addition, the control unit 130 may create an identification value by integrating some of the IDs of four TPMS mounted on the respective tires of the vehicle.

Additionally, when the control unit 130 fails to identify the vehicle even with the first and second identification values, the driver may generate a signal by pressing a specific button (e.g., a function button including door unlocking, door locking, trunk locking, or trunk unlocking) on the vehicle remote control at various times, such as once or twice, and the controller 130 may recognize the same and identify the vehicle.

The storage unit 140 may store an infrared image captured by the infrared camera 110 and a wireless signal received through the wireless communication unit 120.

Also, the storage unit 140 stores data supporting various functions of the vehicle identification device 100. The storage unit 140 may store multiple application programs or applications driven by the vehicle identification device 100, data for operations of the vehicle identification device 100, and instructions. At least some of the application programs may be downloaded from an external server through wireless communication. The application programs may be stored in the storage unit 140, installed on the vehicle identification device 100, and driven by the control unit 130 to perform an operation (or function) of the device.

The network interface unit 150 may provide an interface for connecting the vehicle identification device 100 to a wired/wireless network including the Internet network. The network interface unit 150 may transmit or receive data to or from another user or another electronic device over the connected network or another network linked to the connected network. For example, the vehicle identification device 100 may be connected to a manager terminal, a vehicle entry/exit management server, and a vehicle parking management server through the network interface unit 150 to transmit and receive data.

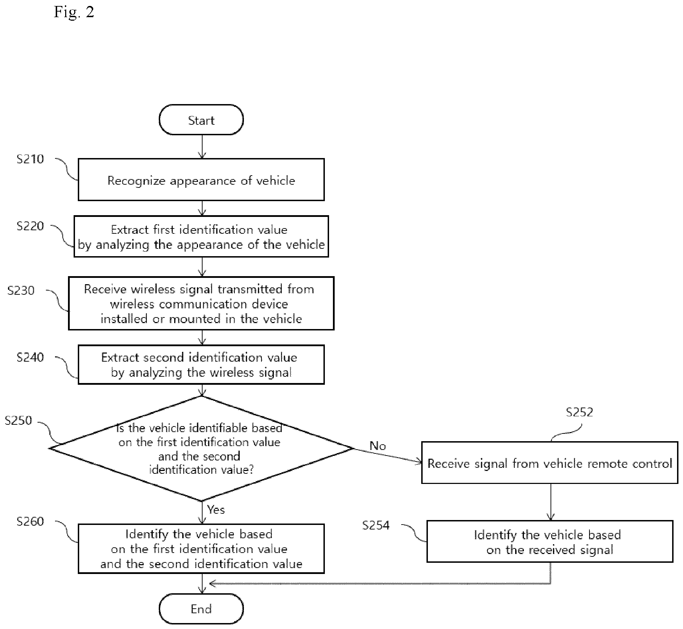

FIG. 2 is a flowchart illustrating a method for identifying a vehicle through image and wireless signal analysis according to an embodiment of the present disclosure.

Referring to FIG. 2, the vehicle identification device 100 recognizes the appearance of a vehicle (S210). Here, the vehicle identification device 100 may recognize the appearance of the vehicle through an infrared spectroscopy. Specifically, the vehicle identification device 100 may project infrared light of 780 nm, 840 nm, and 940 nm to capture a unique value of a reflection characteristic in each wavelength band according to a material and color of a subject and compare the same with previous data for comparison with a previous color value.

The vehicle identification device 100 analyzes the appearance of the vehicle and extracts a first identification value (S220).

That is, the vehicle identification device 100 may recognize the vehicle ID as the first identification value from the infrared image using the OCR.

Also, the vehicle identification device 100 may recognize the vehicle ID as the first identification value from the infrared image based on AI. That is, the control unit 130 may recognize the vehicle ID from the infrared image using the techniques of the MCNN and the RNN For example, the vehicle identification device 100 may detect a vehicle, pre-process an image through image quality enhancement, color enhancement, noise reduction, image conversion, and variable threshold parallel processing, extract a license plate through edge detection, partial inference, and feature vector extraction, and extract the ID part from the extracted license plate using a blob technique. Then, it may recognize the vehicle ID through matching recognition, AI (unsupervised, semi-supervised and reinforced learning) recognition, rate processing, and voting processing.

Also, the vehicle identification device 100 may recognize a license plate object as the first identification value from the infrared image based on AI. That is, the vehicle identification device 100 may recognize the license plate object by applying a grid technique to an object selection method. For example, the vehicle identification device 100 may recognize the license plate object by extracting the license plate area of an entering/exiting vehicle, classifying information (e.g., a vehicle ID, a country, an area) in the license plate, and analyzing the shape and content of the license plate. In this case, the difference in color of the license plate may be distinguished because the vehicle identification device 100 uses the infrared image.

The vehicle identification device 100 may recognize the appearance of the vehicle as the first identification value from the infrared image based on AI. That is, the vehicle identification device 100 may recognize the appearance of the vehicle by applying the grid technique to the object selection method. For example, the vehicle identification device 100 may analyze the appearance of the vehicle by analyzing the design of the front part (excluding the license plate) and the rear part, and features of various attachments and classifying the same into a manufacturer, a vehicle type, a model year, and a displacement.

The vehicle identification device 100 may recognize the vehicle type as the first identification value using the appearance of the vehicle based on AI. That is, the vehicle identification device 100 may recognize the vehicle type through object recognition using the reinforcement learning function.

Subsequently, the vehicle identification device 100 receives a wireless signal transmitted from a wireless communication device installed or mounted in the vehicle (S230).

Subsequently, the vehicle identification device 100 extracts the second identification value by analyzing the wireless signal (S240).

That is, the vehicle identification device 100 may extract a waveform of the wireless signal as the second identification value from the wireless signal.

Also, the vehicle identification device 100 may analyze data included in the wireless signal and extract at least one piece of information as the second identification value from the data.

Also, the vehicle identification device 100 may extract a MAC address as the second identification value from the wireless signal. Here, the vehicle identification device 100 may receive multiple wireless signals from multiple wireless communication devices and may integrate a part of the MAC address of each of the multiple wireless communication devices to create an identification value.

The wireless signal may be a signal generated by the TPMS of the vehicle. To this end, the vehicle identification device 100 may use a function of waking up the TPMS. In addition, the vehicle identification device 100 may create an identification value by integrating some of the IDs of four TPMS mounted on the respective tires of the vehicle.

Subsequently, the vehicle identification device 100 determines whether the vehicle is identifiable based on the first identification value and the second identification value (S250). Upon determining that the vehicle is identifiable based on the first identification value and the second identification value, it identifies the vehicle based on the first identification value and the second identification value (S260).

When it is determined that the vehicle is not identifiable based on the first identification value and the second identification value, the vehicle identification device 100 receives a signal from the vehicle remote control (S252), and identifies the vehicle based on the received signal (S254). For example, the driver may generate a signal by pressing a specific button (e.g., a function button including door unlocking, door locking, trunk locking, or trunk unlocking) on the vehicle remote control at various times, such as once or twice, and the vehicle identification device 100 may recognize the same and identify the vehicle.

The above-described method may be implemented through various means. For example, embodiments of the present disclosure may be implemented by hardware, firmware, software, or a combination thereof.

In the case of an implementation by hardware, the method according to embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, and microprocessors.

In the case of an implementation by firmware or software, the method according to embodiments of the present disclosure may be implemented in the form of a module, a procedure, a function, or the like that performs the above-described functions or operations. A software code may be stored in the memory unit and driven by the processor. The memory unit is located inside or outside the processor and may transmit and receive data to and from the processor via various known means.

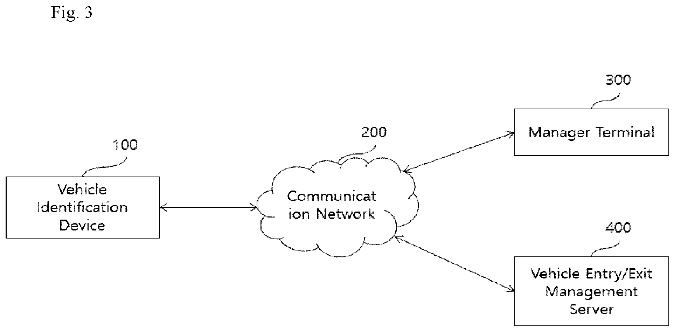

FIG. 3 is a diagram illustrating a configuration of a vehicle entry/exit management system to which a vehicle identification device according to an embodiment of the present disclosure is applied.

Referring to FIG 3, the vehicle entry/exit management system according to the present disclosure may include a vehicle identification device 100, a communication network 200, a manager terminal 300, and a vehicle entry/exit management server 400. Here, the vehicle identification device 100 may be included in the vehicle entry/exit management server 400.

As described with reference to FIG. 1, the vehicle identification device 100 is a device including an infrared camera 110, an antenna 120a, a wireless communication unit 120, a control unit 130, a storage unit 140, and a network interface unit 150. The vehicle identification device 100 may extract a first identification value by analyzing an infrared image captured using the infrared camera 110, extract a second identification value by analyzing a wireless signal received through the wireless communication unit 120, and identify a vehicle based on the first identification value and the second identification value.

The communication network 200 may provide a connection path for transmitting and receiving data among the vehicle identification device 100, the manager terminal 300, and the vehicle entry/exit management server 400, and may include a wired/wireless communication module. Here, the wireless Internet technology may include wireless LAN (WLAN), Wi-Fi, Wireless Broadband (WiBro), World Interoperability for Microwave Access (WiMAX), High Speed Downlink Packet Access (HSDPA), IEEE 802.16, Long Term Evolution (LTE), and Wireless Mobile Broadband Service (WMBS). The short range communication technology may include Bluetooth, Radio Frequency Identification (RFID), Infrared Data Association (IrDA), Ultra Wideband (UWB), and ZigBee. Also, the wired communication technology may include universal serial bus (USB) communication.

The manager terminal 300 may increase the accuracy of license plate recognition by requiring the vehicle identification device 100 to re-learn the module through a cloud server according to misrecognition of the license plate by the vehicle identification device 100.

The manager terminal 300 described herein may include a mobile phone, a smart phone, a laptop computer, a terminal for digital broadcasting, a personal digital assistant (PDA), a portable multimedia player (PMP), a navigation system, a slate PC, a tablet PC, an ultra-book, and wearable devices (e.g., a smart watch, smart glasses, a head mounted display (HMD)).

However, it can be easily understood by those skilled in the art that the configuration according to an embodiment of the present disclosure is applicable even to fixed terminals such as a digital TV, a desktop computer, and a digital signage, except the case where the configuration is applicable only to mobile terminals.

The vehicle entry/exit management server 400 recognizes the appearance of a vehicle through the vehicle identification device 100, and controls an access control means to allow the vehicle to enter and exit when the appearance of the vehicle is the appearance of a permitted vehicle (such as a resident or manager's vehicle). Here, the access control means refers to an entry/exit controller having a vertically rotatable bar.

However, a vehicle (e.g., a visitor' vehicles, a courier vehicle, etc.) other than the permitted vehicles may need to be allowed to enter and exit the place, or a vehicle may need to be allowed to enter and exit even when the license plate or appearance of the vehicle is not recognized due to damage or the like. Accordingly, the vehicle entry/exit management system according to the present disclosure may include an access request terminal with which a visitor can call an in-house person or the manager, and an in-house control terminal configured to receive image information about an entering/exiting vehicle from the vehicle identification device 100.

That is, for a vehicle whose access is not permitted, access permission may be requested to a resident in the house or the parking lot manager through the access request terminal. In addition, for residents, when the license plate or appearance of the vehicle is not normally recognized, the residents may be allowed to enter or exit the place by inputting a personal identifier and password through the access request terminal. Here, the in-house control terminal is included in the home network. It is apparent that the configuration of the home network is applied in various ways according to the request from those skilled in the art.

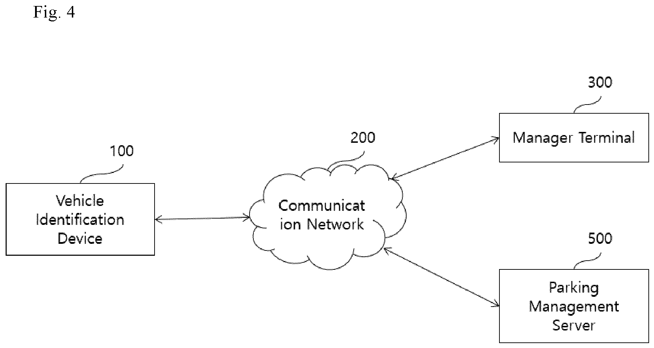

FIG. 4 is a diagram illustrating a configuration of a parking management system to which a vehicle identification device according to an embodiment of the present disclosure is applied.

Referring to FIG. 4, the parking management system according to the present disclosure may include a vehicle identification device 100, a communication network 200, a manager terminal 300, and a parking management server 500. Hereinafter, a description of the same components as those of the vehicle entry/exit management system of FIG 3 will be omitted.

When the driver presses a specific button on the vehicle remote control at a parking location, the parking management server 500 may receive a signal generated from the vehicle remote control through an antenna, determine a direction and a distance, that is, a space coordinate with respect to the antenna, and mark a location of the vehicle in a parking structure (map) in relation to a zone. To this end, the parking management server 500 may include a plurality of antennas or beamforming antennas.

In the above, embodiments disclosed herein have been described with reference to the accompanying drawings. The embodiments shown in the drawings should not be limitedly interpreted, and may be construed by those skilled in the art who are familiar with the contents of the present disclosure as being combined with each other. When embodiments are combined, some components may be omitted.

The terms or words used in the present disclosure and claims described below should not be interpreted as being limited to ordinary or lexical meanings, and should be interpreted as meanings and concepts consistent with the technical idea of the present disclosure.

Therefore, the embodiments disclosed in this specification and the configurations shown in the drawings are merely some embodiments of the present disclosure, and do not represent the entire technical idea of the present disclosure. Therefore, it should be understood that there may be various equivalents and variations that can replace the embodiments and the configurations at the time of filing this application.

### [Industrial Applicability]

The present disclosure may be used for a method and device for identifying a vehicle through image and wireless signal analysis.

## Claims

1. A device for identifying a vehicle through image and wireless signal analysis, the device comprising:
an infrared camera configured to capture an image of an appearance of the vehicle while radiating infrared light onto the vehicle;
an antenna;
a wireless communication unit configured to receive, through the antenna, a wireless signal transmitted from a wireless communication device installed or mounted in the vehicle;
a storage unit configured to store the infrared image captured by the infrared camera and the wireless signal received through the wireless communication unit; and
a control unit configured to:
extract a first identification value by analyzing the infrared image stored in the storage unit;
extract a second identification value by analyzing the wireless signal stored in the storage unit; and
identify the vehicle based on the first identification value and the second identification value.

2. The device of claim 1, wherein the control unit recognizes a vehicle ID as the first identification value from the infrared image using an optical character reader (OCR).

3. The device of claim 1, wherein the control unit recognizes a vehicle ID as the first identification value from the infrared image based on artificial intelligence.

4. The device of claim 1, wherein the control unit recognizes a license plate as the first identification value from the infrared image based on artificial intelligence.

5. The device of claim 1, wherein the control unit recognizes the appearance of the vehicle as the first identification value from the infrared image based on artificial intelligence.

6. The device of claim 5, wherein the appearance of the vehicle includes at least one of an exterior color, an interior color, a black box appearance, a headlamp design, a rear lamp design, an emergency lamp flickering interval, a glass production date, a wheel design, a grill design, and a vehicle emblem.

7. The device of claim 5, wherein the control unit recognizes a vehicle model as the first identification value using the appearance of the vehicle based on artificial intelligence.

8. The device of claim 1, wherein the control unit extracts a waveform of the wireless signal as the second identification value from the wireless signal.

9. The device of claim 1, wherein the control unit analyzes data included in the wireless signal and extracts at least one piece of information as the second identification value from the data.

10. The device of claim 1, wherein the control unit extracts a MAC address as the second identification value from the wireless signal.

11. The device of claim 1, wherein the wireless signal is a signal generated by a tire pressure monitoring system (TPMS) of the vehicle.

12. A method for identifying a vehicle through image and wireless signal analysis, the method comprising:
recognizing, by a vehicle identification device, an appearance of the vehicle;
extracting, by the vehicle identification device, a first identification value by analyzing the appearance of the vehicle;
receiving, by the vehicle identification device, a wireless signal transmitted from a wireless communication device installed or mounted in the vehicle;
extracting, by the vehicle identification device, a second identification value by analyzing the wireless signal; and
identifying, by the vehicle identification device, the vehicle based on the first identification value and the second identification value.

13. The method of claim 12, wherein, in the recognizing of the appearance of the vehicle, the vehicle identification device recognizes the appearance of the vehicle through infrared spectroscopy.

14. The method of claim 12, wherein, in the extracting of the first identification value, the vehicle identification device recognizes at least one of a vehicle ID, a license plate, the appearance of the vehicle, and a vehicle model as the first identification value based on artificial intelligence.
